# FASCICULE DE BREVET EUROPEEN

(11) **EP 3 551 927 B1**
(45) Date de publication et mention de la délivrance du brevet: **24.08.2022**
(21) Numéro de dépôt: 17816985.0
(22) Date de dépôt: 05.12.2017
(51) Int. Cl.: F17C 11/00

(54) **RÉSERVOIR DE STOCKAGE D'HYDROGÈNE COMPORTANT UNE PLURALITÉ DE JOINTS D'ÉTANCHÉITÉ**
WASSERSTOFFSPEICHER MIT MEHREREN WASSERDICHTEN ABDICHTUNGEN
HYDROGEN STORAGE RESERVOIR WITH MANY WATERTIGHT SEALINGS

(30) Priorité: 06.12.2016 FR 1661982
(43) Date de publication de la demande: 16.10.2019
(73) Titulaire: Commissariat à l'énergie atomique et aux énergies alternatives, 75015 Paris (FR)
(72) Inventeur: GILLIA, Olivier, 38360 Sassenage (FR); CHAISE, Albin, 38000 Grenoble (FR); ELIE, Manon, 38100 Grenoble (FR); PONTHIEU, Marine, 38600 Fontaine (FR)
(74) Mandataire: Brevalex
(86) Numéro de dépôt international: PCT/FR2017/053381
(87) Numéro de publication internationale: WO 2018/104644

(56) Documents cités:
- DE-A1- 19 859 654
- FR-A1- 2 996 628
- FR-A1- 3 014 999
- US-A1- 2012 160 712

## Description

### DOMAINE TECHNIQUE

La présente invention se rapporte au domaine général des réservoirs de stockage de l'hydrogène sous forme d'hydrures, notamment des hydrures métalliques.

L'hydrogène appartient aux vecteurs stockables d'énergie alternatives développées depuis maintenant plusieurs années. L'hydrogène peut être obtenu de diverses manières, par exemple à partir de gaz naturel ou d'autres hydrocarbures, et peut notamment être produit par le biais de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE). L'hydrogène peut en outre avantageusement être utilisé comme source d'énergie dans des piles à combustibles à oxyde solide, désignées habituellement par l'acronyme SOFC pour « Solid Oxide Fuel Cells » en anglais ou dans des piles à combustibles à membranes échangeuses de protons (ou encore PEM pour « Proton Exchange Membranes » en anglais).

L'invention trouve des applications dans différents domaines de l'industrie, et notamment lorsqu'il existe un besoin en compression d'hydrogène, comme par exemple pour des compresseurs de gaz hydrogène par hydrures tels que pour des stations-service à hydrogène. De plus, l'invention s'applique aussi bien à des solutions de stockage de l'hydrogène de type stationnaire que de type embarqué.

Ainsi, l'invention peut être utilisée pour le stockage embarqué d'hydrogène, par exemple pour pile à combustible ou moteur thermique, par exemple pour les moyens de transport, tels que les bateaux, sous-marins, voitures, autobus, camions, engins de chantier, deux roues, entre autres.

En outre, l'invention peut être utilisée dans le domaine des alimentations transportables en énergie telles que les batteries pour appareils électroniques portables comme les téléphones portables, les ordinateurs portables, entre autres.

L'invention peut également être utilisée pour le stockage stationnaire de l'hydrogène, par exemple en grande quantité, comme pour les groupes électrogènes, ou pour le stockage de l'hydrogène produit en grande quantité par électrolyse de l'eau avec de l'électricité provenant des éoliennes, panneaux photovoltaïques, géothermie, entre autres.

Enfin, l'invention peut aussi permettre de stocker toute autre source d'hydrogène provenant par exemple de reformage d'hydrocarbures ou d'autres procédés d'obtention d'hydrogène (photo-catalyse, biologique, géologique, entre autres).

Ainsi, l'invention propose un réservoir de stockage d'hydrogène par absorption de l'hydrogène dans un matériau de stockage d'hydrogène comportant une pluralité de joints d'étanchéité associés à des éléments de séparation, ainsi qu'un procédé de fabrication associé.

### ÉTAT DE LA TECHNIQUE ANTÉRIEURE

Le stockage de l'hydrogène dans un hydrure est une réaction exothermique, à savoir qu'elle dégage de la chaleur, alors que la libération de l'hydrogène est une réaction endothermique, à savoir qu'elle absorbe de la chaleur.

Une contrainte importante dans le domaine du stockage et de la libération d'hydrogène est de pouvoir gérer au mieux les régimes de fonctionnement thermiques, par exemple ceux d'une pile à combustible à oxyde solide (SOFC) ou d'un électrolyseur d'eau à haute température (EHT).

Ainsi, pour pouvoir gérer les aspects endothermiques, respectivement exothermiques, de la désorption de l'hydrogène du réservoir d'hydrures, respectivement de l'absorption de l'hydrogène, l'art antérieur enseigne de concevoir des réservoirs d'hydrures sous la forme de cylindres verticaux.

Toutefois, afin de pouvoir gérer au mieux les contraintes mécaniques appliquées au réservoir d'hydrures, il est bien connu d'adopter une conception étagée d'un tel cylindre vertical afin d'éviter d'avoir un lit d'hydrures trop profond. Autrement dit, de nombreuses conceptions de réservoirs d'hydrures sous la forme de cylindres verticaux prévoient la mise en place de multiples séparations dans le cylindre pour former une pluralité de lits d'hydrures espacés verticalement entre eux.

En effet, les solutions techniques ne prévoyant qu'un seul lit d'hydrure au fond du cylindre vertical ne sont pas viables d'un point de vue mécanique. Le phénomène de « respiration » des hydrures lors de l'absorption et de la désorption de l'hydrogène, à savoir un gonflement et un dégonflement des hydrures, provoque l'apparition de fortes contraintes sur les parois du cylindre dénommées également virole du cylindre. Comme il a été décrit dans l'article « Stress on a reaction vessel by the swelling of a hydrogen absorbing alloy », K. Nasako et al, janvier 1998, Journal of Alloys and Compounds, Volume 264, pages 271-276, ces contraintes augmentent avec le nombre de cycles d'absorption/désorption jusqu'à atteindre la limite élastique du matériau, ce qui est inacceptable pour un réservoir de stockage d'hydrogène.

Diverses solutions de réservoirs d'hydrures sous la forme de cylindres verticaux avec mise en place de multiples séparations ont donc été décrites dans l'art antérieur.

A titre d'exemple, la demande de brevet français FR 2 953 820 A1 divulgue l'utilisation de séparateurs verticaux sous forme de coupelles, disposées à égale distance en les enfilant sur un tube poreux de distribution d'hydrogène en même temps que dans la virole du cylindre. Un bord recourbé permet de créer de la souplesse qui permet de mettre en serrage élastique les coupelles sur le tube ou la virole. Le dispositif permet d'assurer un passage aisé de l'hydrogène vers ou depuis la poudre hydrure en assurant un confinement de la poudre hydrure dans chaque godet.

Par ailleurs, la demande de brevet français FR 2 996 628 A1 décrit un compartimentage d'un réservoir d'hydrures sous forme de cylindre vertical réalisé par l'intermédiaire de godets empilés sur un tube central. Le tube central est constitué d'un assemblage de tronçons de tube, chaque tronçon étant monté serré dans un orifice central de chaque godet. L'étanchéité entre chaque godet est assurée par déformation de lèvres. L'hydrogène arrive dans chaque godet car le tube central est poreux à l'hydrogène mais pas à la poudre hydrure. Le dispositif permet là aussi d'assurer un passage aisé de l'hydrogène vers ou depuis la poudre hydrure en assurant un confinement de la poudre hydrure dans chaque godet.

De plus, la demande de brevet français FR 3 014 999 A1 enseigne la réalisation d'un compartimentage par l'intermédiaire de godets empilés. L'hydrogène entre par un filtre incorporé dans les parois du godet, et une étanchéité par emboîtement et joint torique est réalisée entre chacun des godets.

Ainsi, diverses solutions de conception de réservoirs d'hydrures sous la forme de cylindres verticaux avec éléments de séparation ont déjà été envisagées par l'art antérieur partant du principe que, pour limiter les contraintes mécaniques, un seul lit de poudre hydrure au fond du réservoir n'était pas viable.

Par ailleurs, l'article « A study on wall stresses induced by LaNis alloy hydrogen absorption-desorption cycles », B.Y. Ao et al, 22 mars 2005, Journal of Alloys and Compounds, Volume 390, pages 122-126, l'article « Effects of cyclic hydriding-dehydriding reactions of LaNi5 on the thin-wall deformation of metal hydride storage vessels with various configuration », C-K. Ling et al, 29 juin 2012, Rewable Energy, Volume 48, pages 404-410, et l'article « A tool for modelling the breathing of hybride powder in its container while cyclically absorbing and desorbing hydrogen », B. Charlas et al, 8 janvier 2015, International Journal of Hydrogen Energy, Volume 40, pages 2283-2294, ont démontré que, pour limiter les contraintes mécaniques, il est nécessaire de limiter la profondeur du lit de poudre hydrure. En particulier, pour un rapport entre profondeur du lit de poudre hydrure et largeur du lit de poudre hydrure inférieur à 1, les contraintes mécaniques restent faibles.

En outre, la demande de brevet US 2012/0160712 A1 décrit un autre exemple de réservoir de stockage d'hydrogène. Des éléments de séparation, pourvus d'un passage pour leur montage sur un conduit, reçoivent un matériau de stockage. Des éléments d'étanchéité sont disposés entre les éléments de séparation et les matériaux de stockage. Ces éléments d'étanchéité ne permettent pas d'offrir un découplage des fonctions entre : plateau de supportage et séparation des hydrures ; et étanchéité. La fonction d'étanchéité ne peut ainsi être ajustée. De plus, la solution proposée ici est complexe, coûteuse et peu efficace.

Il existe ainsi encore un besoin pour améliorer la conception des réservoirs d'hydrures sous forme de cylindres verticaux impliquant notamment la séparation verticale du lit de poudre hydrure en une pluralité de lits d'hydrures peu profonds.

Par ailleurs, la demande de brevet américain US 2012/0160712 A1 et la demande de brevet allemand DE 198 59 654 A1 divulguent d'autres solutions de réservoirs de stockage d'hydrogène.

### EXPOSÉ DE L'INVENTION

L'invention a pour but de remédier au moins partiellement aux besoins mentionnés précédemment et aux inconvénients relatifs aux réalisations de l'art antérieur.

L'invention vise en particulier à proposer une nouvelle conception de réservoir de stockage d'hydrogène, notamment de réservoir d'hydrures sous la forme d'un cylindre vertical, qui soit simple et pratique de sorte à rendre le montage aisé.

L'invention a ainsi pour objet, selon l'un de ses aspects, un réservoir de stockage d'hydrogène selon la revendication 1.

De façon préférentielle, la plus grande dimension transversale, c'est-à-dire la plus grande dimension selon l'axe transversal perpendiculaire à l'axe longitudinal, des éléments de séparation est inférieure à la plus grande dimension transversale du volume interne de l'enveloppe dans lequel sont situés le conduit, les éléments de séparation et les matériaux de stockage d'hydrogène.

De plus, préférentiellement encore, le réservoir comporte une pluralité de joints d'étanchéité, chaque joint d'étanchéité étant associé à un élément de séparation, chaque joint d'étanchéité s'étendant sur tout le pourtour de l'élément de séparation correspondant et au contact de l'enveloppe, dans l'espace formé entre l'élément de séparation et l'enveloppe du fait de la différence de plus grande dimension transversale.

De façon avantageuse, chaque joint d'étanchéité permet d'assurer l'étanchéité nécessaire entre l'élément de séparation correspondant et l'enveloppe afin d'éviter que tout matériau de stockage, notamment de la poudre hydrure, ne puisse traverser un lit de matériaux de stockage, soit autrement dit ne puisse passer à un étage inférieur du réservoir de stockage.

A la différence des solutions de l'art antérieur, et notamment de celle de US 2012/0160712 A1, l'invention permet un découplage des fonctions entre plateau de supportage et séparation des hydrures, et étanchéité. Cela permet d'ajuster la fonction étanchéité. De plus, la solution proposée est simple, bon marché et efficace.

Le réservoir de stockage d'hydrogène selon l'invention peut en outre comporter l'une ou plusieurs des caractéristiques suivantes prises isolément ou suivant toutes combinaisons techniques possibles.

De façon préférentielle, les éléments de séparation sont régulièrement espacés les uns des autres le long du conduit d'alimentation et de collecte en hydrogène.

De façon préférentielle également, l'enveloppe est de forme cylindrique. De plus, l'axe longitudinal de l'enveloppe correspond préférentiellement à un axe vertical de sorte que l'enveloppe se présente préférentiellement sous la forme d'un cylindre vertical.

Les éléments de séparation sont avantageusement montés sur le conduit d'alimentation et de collecte en hydrogène de façon étanche. Les éléments de séparation peuvent particulièrement être montés serrés sur le conduit, par exemple par brasage, par soudure, par collage, par montage en force, entre autres. Les éléments de séparation peuvent encore être formés d'une seule pièce avec le conduit.

Chaque joint d'étanchéité peut par exemple être réalisé en caoutchouc, par exemple en caoutchouc fluorocarbone (FKM) ou encore appelé Viton^{®}, qui résiste à de hautes températures. De façon plus générale, chaque joint d'étanchéité peut être réalisé en un matériau polymère dont l'élasticité est suffisante pour ne pas être dégradé au montage, qui n'induit pas de pollution néfaste au fonctionnement du matériau de stockage, notamment des hydrures, et qui est compatible avec la présence d'hydrogène, autrement dit qui présente une stabilité à l'hydrogène.

Chaque joint d'étanchéité est avantageusement solidarisé à l'élément de séparation correspondant.

Chaque joint d'étanchéité peut comporter une portion principale s'étendant longitudinalement au contact du bord longitudinal de l'élément de séparation.

Chaque joint d'étanchéité peut tout particulièrement comporter une première portion et une deuxième portion s'étendant transversalement vers le conduit de part et d'autre de l'élément de séparation correspondant depuis la portion principale du joint d'étanchéité.

De plus, chaque joint d'étanchéité peut comporter une troisième portion formant une lèvre s'étendant transversalement vers l'enveloppe depuis la portion principale du joint d'étanchéité au contact de l'enveloppe.

Selon un exemple de réalisation, la troisième portion du joint d'étanchéité peut s'étendre transversalement vers l'enveloppe depuis la portion principale du joint d'étanchéité sensiblement dans le prolongement transversal de la première portion et/ou de la deuxième portion.

Selon un autre exemple de réalisation, la troisième portion du joint d'étanchéité peut s'étendre transversalement vers l'enveloppe depuis la portion principale du joint d'étanchéité sensiblement à mi-distance des première et deuxième portions. De cette façon, il est possible de former un joint d'étanchéité à lèvre centrale. L'avantage d'un tel joint à lèvre centrale est d'obtenir un meilleur équilibre par rapport à l'élément de séparation sur lequel il est installé.

Chaque joint d'étanchéité peut encore comporter une troisième portion formant une lèvre et une quatrième portion formant une lèvre s'étendant chacune transversalement vers l'enveloppe depuis la portion principale du joint d'étanchéité au contact de l'enveloppe, la troisième portion s'étendant sensiblement dans le prolongement transversal de la première portion et la quatrième portion s'étendant sensiblement dans le prolongement transversal de la deuxième portion. De cette façon, il est possible de former un joint d'étanchéité à double lèvre. L'avantage d'un tel joint à double lèvre est d'obtenir un meilleur équilibre par rapport à l'élément de séparation sur lequel il est installé, ainsi qu'une meilleure étanchéité car il y a alors une double barrière à franchir. Toutefois, le coût de fabrication est plus élevé.

La ou les lèvres du joint d'étanchéité, en particulier la troisième portion et/ou la quatrième portion, présentent préférentiellement une certaine souplesse pour bien s'adapter et se mettre en précontrainte avec l'enveloppe. Ainsi, de façon avantageuse, le rapport L/e entre la dimension transversale (L), ou encore longueur, de la lèvre sur la dimension longitudinale (e), ou encore épaisseur, de la lèvre est compris entre 2 et 4. En effet, un rapport L/e plus faible, soit strictement inférieur à 2, impliquerait un joint d'étanchéité trop rigide qui pourrait par exemple ne pas pouvoir s'adapter au défaut de circularité assez fréquemment rencontré en chaudronnerie pour un type d'enveloppe sous forme cylindrique. De plus, un rapport L/e plus élevé, soit strictement supérieur à 4, impliquerait d'avoir une ou des lèvres avec un manquement de tenue mécanique de sorte qu'elles risqueraient de froncer et de laisser apparaître des zones de non contact avec l'enveloppe.

Par ailleurs, chaque élément de séparation peut se présenter sous la forme d'un disque ou plateau, et chaque joint d'étanchéité peut se présenter sous la forme d'un anneau disposé autour du disque associé.

De plus, la plus grande dimension transversale de chaque joint d'étanchéité est avantageusement supérieure à la plus grande dimension transversale du volume interne de l'enveloppe. Ainsi, de façon avantageuse, le joint d'étanchéité est monté en précontrainte dans l'enveloppe. Plus précisément, lorsque l'on introduit le joint d'étanchéité dans l'enveloppe, la ou les lèvres du joint se courbent vers le haut du réservoir et appliquent naturellement une pression contre la paroi interne de l'enveloppe, ce qui assure une bonne étanchéité.

En outre, la distance, ou encore l'espace longitudinal, entre deux éléments de séparation successifs le long de l'axe longitudinal peut être inférieure à la plus grande dimension transversale du volume interne de l'enveloppe.

De cette façon, il est possible d'obtenir des lits de matériaux de stockage qui ne sont pas trop élancés longitudinalement, en particulier verticalement. Autrement dit, l'épaisseur des lits de matériaux de stockage peut être contrôlée.

Ainsi, le rapport entre la distance entre deux éléments de séparation successifs et la plus grande dimension transversale du volume interne de l'enveloppe peut être strictement inférieur à 1. Cette valeur peut être affinée en réalisant notamment des mesures d'augmentation de contraintes pour des lits de matériaux de stockage de différents élancements, en particulier du fait que chaque matériau de stockage, notamment chaque hydrure, ne présente pas le même comportement en cyclage.

Par ailleurs, le conduit d'alimentation et de collecte en hydrogène peut être poreux ou peut avantageusement comporter une pluralité d'orifices de passage d'hydrogène, par exemple réalisés par perçage, notamment au moins un orifice de passage d'hydrogène à chaque étage du réservoir formé entre deux éléments de séparation successifs.

De plus, le conduit d'alimentation et de collecte en hydrogène peut avantageusement comporter une pluralité de filtres disposés contre le conduit, chaque filtre étant en vis-à-vis d'au moins un orifice de passage d'hydrogène, le conduit comportant notamment au moins un filtre disposé contre au moins un orifice de passage d'hydrogène formé sur le conduit à chaque étage du réservoir formé entre deux éléments de séparation successifs.

De façon avantageuse, la présence d'un filtre recouvrant au moins un orifice de passage d'hydrogène permet d'éviter que le matériau de stockage, notamment sous forme de poudre hydrure, ne puisse s'échapper au travers du conduit.

Les filtres peuvent par exemple comporter un tissu ou un feutre à maille fine. Les filtres peuvent de plus comporter un matériau métallique et/ou polymère, voire tout autre type de matériau. Les filtres peuvent alors être enroulés autour du conduit. Afin d'obtenir une bonne étanchéité, plus d'un enroulement du filtre sous forme de tissu ou de feutre autour du conduit peut être réalisé.

Par ailleurs, chaque filtre peut être maintenu contre le conduit par le biais de moyens de serrage, notamment des colliers de serrage. De tels colliers de serrage peuvent par exemple correspondre à des colliers de serrage de type Serflex ou Colson.

En outre, le matériau de stockage d'hydrogène peut préférentiellement comporter des hydrures, notamment des hydrures métalliques.

Par ailleurs, l'invention a encore pour objet, selon un autre de ses aspects, un procédé de fabrication d'un réservoir de stockage d'hydrogène tel que défini précédemment, caractérisé en ce qu'il comporte les étapes suivantes :
- éventuelle mise en place de matériau de stockage d'hydrogène dans le fond de l'enveloppe du réservoir,
- mise en place de matériau de stockage d'hydrogène sur chaque élément de séparation,
l'ensemble formé par le conduit d'alimentation et de collecte en hydrogène, les éléments de séparation et les joints d'étanchéité étant monté préalablement à la mise en place de matériau de stockage d'hydrogène,
chaque élément de séparation étant notamment introduit dans l'enveloppe dès la fin de la mise en place de matériau de stockage d'hydrogène sur cet élément de séparation.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 est une vue schématique en coupe d'un exemple de réalisation d'un réservoir de stockage d'hydrogène conforme à l'invention,
- la figure 2 est une vue schématique en perspective représentant de façon isolée le conduit d'alimentation et de collecte d'hydrogène du réservoir de stockage d'hydrogène de la figure 1,
- la figure 3 est une vue agrandie d'une partie de la figure 1 montrant un détail de réalisation du réservoir de stockage d'hydrogène de la figure 1,
- la figure 4 est une vue schématique en coupe d'un joint d'étanchéité utilisé dans le réservoir de stockage d'hydrogène de la figure 1, et
- les figures 5 et 6 sont des vues schématiques en coupe représentant des variantes de réalisation du joint d'étanchéité de la figure 4.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Il est précisé que, dans la description qui va suivre d'exemples de réalisation particuliers de l'invention, le matériau de stockage de l'hydrogène correspond à des hydrures, notamment des hydrures métalliques. De plus, le réservoir de stockage d'hydrogène décrit présente une forme cylindrique de révolution. Néanmoins, tout réservoir formé par élément creux présentant une dimension longitudinale plus grande que sa dimension transversale, et ayant une section quelconque, par exemple circulaire ou polygonale ou ellipsoïdale, ne sort pas du cadre de la présente invention.

Il est de plus à noter que, dans les exemples de réalisation décrits ci-après, les filtres 11 utilisés correspondent à des feutres en matériau polymère et les colliers de serrage 12 sont de type Colson. Bien entendu, ces choix ne sont aucunement limitatifs.

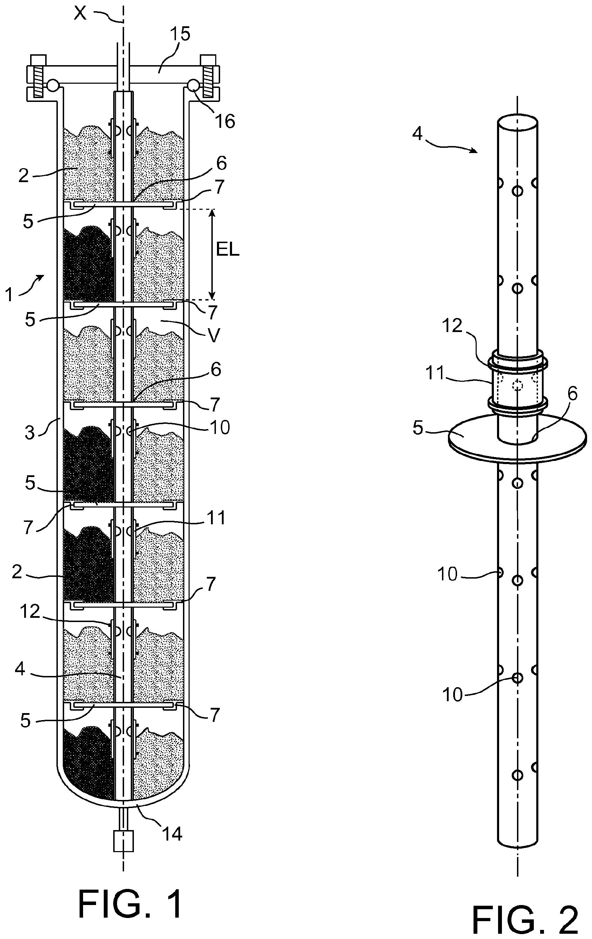

En référence aux figures 1 à 3, on a représenté un exemple de réalisation d'un réservoir 1 de stockage d'hydrogène par absorption de l'hydrogène dans un matériau de stockage 2 d'hydrogène.

Sur la figure 1, on peut voir cet exemple de réservoir 1 de stockage représenté schématiquement.

Le réservoir 1 comporte une enveloppe, ou virole 3, d'axe longitudinal X obturée à une extrémité inférieure par un fond inférieur 14. Le réservoir 1 comporte également une paroi supérieure 15 pourvue d'un joint torique 16 fermant l'extrémité supérieure de la virole 3.

Le réservoir 1 est destiné à être généralement orienté de sorte que l'axe longitudinal X soit sensiblement aligné avec la direction du vecteur gravité. Cependant, lors de son utilisation, par exemple dans le cas d'une utilisation embarquée, son orientation peut changer.

Le réservoir 1 comporte des moyens d'alimentation et de collecte en hydrogène comprenant notamment un conduit 4 d'alimentation et de collecte en hydrogène s'étendant le long de l'axe longitudinal X du fond inférieur 14 vers la paroi supérieure 15.

Le conduit 4 est par exemple connecté à un circuit d'alimentation et de collecte en hydrogène, par exemple au niveau de l'une de ses extrémités longitudinales.

Comme il sera expliqué ci-après, l'intérieur du réservoir 1 est divisé en une pluralité d'étages le long de l'axe longitudinal X et chaque étage comporte du matériau de stockage 2. Ces étages sont réalisés de telle manière qu'ils empêchent le passage du matériau de stockage, notamment sous forme de poudre hydrure, d'un étage à l'autre, évitant ainsi l'accumulation de poudre dans un étage, notamment dans les étages inférieures et l'apparition de contraintes de pression sur la paroi interne de la virole 3.

Ainsi, le réservoir 1 comporte un empilement d'une pluralité d'éléments de séparation 5 le long de l'axe longitudinal X, régulièrement espacés les uns des autres le long du conduit 4 d'alimentation et de collecte en hydrogène. Ces éléments de séparation 5 sont montés sur le conduit 4 de façon étanche, par exemple par brasage, par soudure, par collage ou par montage en force, ou encore étant formés d'une seule pièce avec le conduit 4. De plus, ces éléments de séparation 5 se présentent ici sous la forme de disques 5.

Chaque disque 5 comporte un passage 6, ou orifice central, qui permet le montage du disque 5 autour du conduit 4. De plus, chaque disque 5 définit un fond perpendiculaire à l'axe longitudinal X sur lequel de la poudre hydrure est déposée lors de la fabrication du réservoir 1 pour former une pluralité d'étages ou lits de poudre hydrure.

Les disques 5 sont montés sur le conduit 4 de sorte que l'espace longitudinal EL entre deux disques 5 successifs soit inférieur au diamètre interne Tv du volume interne V de la virole 3. Ainsi, l'épaisseur des lits de poudre hydrure peut être contrôlée. Autrement dit, le rapport EL/Tv est strictement inférieur à 1.

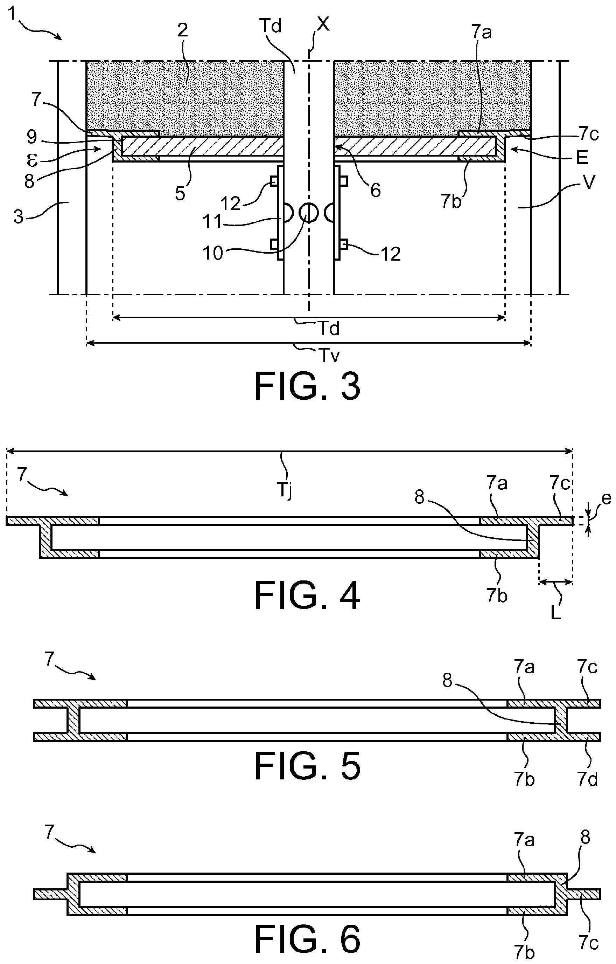

Par ailleurs, comme visible sur la figure 3, le diamètre Td des disques 5 est inférieur au diamètre interne Tv de la virole 3 de sorte qu'un espace E existe entre chaque disque 5 et la virole 3.

De façon avantageuse, le réservoir 1 comporte alors une pluralité de joints d'étanchéité 7 chacun associé à un disque 5, se présentant sous la forme d'anneaux, et s'étendant sur tout le pourtour du disque 5 correspondant. Chaque joint d'étanchéité 7 se situe de plus dans l'espace E formé entre le disque 5 correspondant et la virole 3.

Chaque joint d'étanchéité 7 est par exemple réalisé en caoutchouc, par exemple en caoutchouc fluorocarbone (FKM) ou encore appelé Viton^{®}.

Avantageusement, chaque joint d'étanchéité 7 est solidarisé au disque 5 auquel il est associé. Comme visible sur les figures 3 et 4, chaque joint d'étanchéité 7 comporte une portion principale 8 s'étendant longitudinalement au contact du bord longitudinal 9 du disque 5. De plus, le joint d'étanchéité 7 comporte une première portion 7a et une deuxième portion 7b s'étendant transversalement vers le conduit 4 de part et d'autre du disque 5 depuis la portion principale 8.

Dans l'exemple des figures 3 et 4, le joint d'étanchéité 7 comporte une troisième portion 7c formant une lèvre s'étendant transversalement vers la virole 3 depuis la portion principale 8 du joint d'étanchéité 7 au contact de la virole 3, l'étendue transversale de cette troisième portion 7c s'effectuant dans le prolongement transversal de la première portion 7a.

En revanche, dans l'exemple de la figure 6 qui est une variante de réalisation de la figure 4, la troisième portion 7c du joint d'étanchéité 7 s'étend transversalement vers la virole 3 depuis la portion principale 8 à mi-distance des première 7a et deuxième 7b portions. De cette façon, il est possible de former un joint d'étanchéité 7 dit à lèvre centrale présentant l'avantage d'un meilleur équilibre par rapport au disque 5 sur lequel il est installé.

En variante encore des figures 4 et 6, l'exemple de réalisation de la figure 5 montre que le joint d'étanchéité 7 comporte une troisième portion 7c formant une lèvre et une quatrième portion 7d formant une lèvre s'étendant chacune transversalement vers la virole 3 depuis la portion principale 8 au contact de la virole 3, la troisième portion 7c s'étendant dans le prolongement transversal de la première portion 7a et la quatrième portion 7d s'étendant dans le prolongement transversal de la deuxième portion 7b. Alors, il est possible de former un joint d'étanchéité 7 dit à double lèvre présentant aussi l'avantage d'un meilleur équilibre par rapport au disque 5 sur lequel il est installé, ainsi qu'une meilleure étanchéité car il y a alors une double barrière à franchir.

De façon préférentielle, comme visible sur la figure 4, le rapport L/e entre la longueur L d'une lèvre 7c ou 7d sur l'épaisseur e de la lèvre est compris entre 2 et 4. En effet, un rapport L/e plus faible, soit strictement inférieur à 2, impliquerait un joint d'étanchéité 7 trop rigide qui pourrait par exemple ne pas pouvoir s'adapter au défaut de circularité assez fréquemment rencontré en chaudronnerie pour ce type de virole 3 cylindrique. De plus, un rapport L/e plus élevé, soit strictement supérieur à 4, impliquerait d'avoir une ou des lèvres avec un manquement de tenue mécanique de sorte qu'elles risqueraient de froncer et de laisser apparaître des zones de non contact avec la virole 3.

Par ailleurs, il est à noter que le diamètre Tj de chaque joint d'étanchéité 7, visible sur la figure 4, est supérieur au diamètre interne Tv de la virole 3. Ainsi, de façon avantageuse, le joint d'étanchéité 7 est monté en précontrainte dans la virole 3. Plus précisément, lorsque l'on introduit le joint d'étanchéité 7 dans la virole 3, la ou les lèvres 7c, 7d du joint 7 se courbent vers le haut du réservoir 1 et appliquent naturellement une pression contre la paroi interne de la virole 3, ce qui assure une bonne étanchéité.

En outre, comme visible sur la figure 2, le conduit 4 comporte avantageusement une pluralité d'orifices 10, ou trous 10, de passage d'hydrogène, par exemple réalisés par perçage. Plus précisément, chaque étage du réservoir 1 comporte une pluralité d'orifices 10 au niveau du conduit 4.

Le conduit 4 comporte alors de manière avantageuse un filtre 11 au niveau de chaque étage pour recouvrir les orifices 10 de passage d'hydrogène.

Ces filtres 11 permettent d'éviter que la poudre hydrure 2 ne puisse s'échapper au travers du conduit 4. Ils peuvent par exemple être réalisés en tissu ou en feutre à maille fine, comportant par exemple un matériau métallique et/ou polymère. Afin d'obtenir une bonne étanchéité, les filtres sous cette forme sont enroulés plus d'une fois autour du conduit 4.

Par ailleurs, afin de permettre un maintien des filtres 11 sur le conduit 4 une fois l'enroulement terminé, des colliers de serrage 12 peuvent être utilisés, comme visible sur la figure 3, par exemple de type Colson.

## Revendications

1. Réservoir (1) de stockage d'hydrogène par absorption de l'hydrogène dans un matériau de stockage (2) d'hydrogène, le réservoir (1) comportant le matériau de stockage (2) d'hydrogène, et comportant en outre :
- une enveloppe (3) d'axe longitudinal (X) obturée à ses deux extrémités longitudinales,
- un conduit (4) d'alimentation et de collecte en hydrogène s'étendant le long de l'axe longitudinal (X), comportant une pluralité d'orifices (10) de passage d'hydrogène,
- un empilement d'une pluralité d'éléments de séparation (5) le long de l'axe longitudinal (X), chaque élément de séparation (5) comportant un passage (6) permettant le montage de l'élément de séparation (5) autour du conduit (4), et chaque élément de séparation (5) formant un fond sensiblement perpendiculaire à l'axe longitudinal (X) recevant le matériau de stockage (2) d'hydrogène de sorte à former une pluralité de lits de matériau de stockage (2) d'hydrogène,
**caractérisé en ce que** la plus grande dimension transversale (Td) des éléments de séparation (5) est inférieure à la plus grande dimension transversale (Tv) du volume interne (V) de l'enveloppe (3) dans lequel sont situés le conduit (4), les éléments de séparation (5) et les matériaux de stockage (2) d'hydrogène,
**en ce que** le réservoir (1) comporte une pluralité de joints d'étanchéité (7), chaque joint d'étanchéité (7) étant associé à un élément de séparation (5), chaque joint d'étanchéité (7) s'étendant sur tout le pourtour de l'élément de séparation (5) correspondant et au contact de l'enveloppe (3), dans l'espace (E) formé entre l'élément de séparation (5) et l'enveloppe (3) du fait de la différence de plus grande dimension transversale (Td, Tv),
**en ce que** chaque joint d'étanchéité (7) comporte une portion principale (8) s'étendant longitudinalement au contact du bord longitudinal (9) de l'élément de séparation (5),
et **en ce que** chaque joint d'étanchéité (7) comporte en outre une première portion (7a) et une deuxième portion (7b) s'étendant transversalement vers le conduit (4) de part et d'autre de l'élément de séparation (5) correspondant depuis la portion principale (8) du joint d'étanchéité (7).

2. Réservoir selon la revendication 1, **caractérisé en ce que** chaque joint d'étanchéité (7) est solidarisé à l'élément de séparation (5) correspondant.

3. Réservoir selon la revendication 1 ou 2, **caractérisé en ce que** chaque joint d'étanchéité (7) comporte une troisième portion (7c) formant une lèvre s'étendant transversalement vers l'enveloppe (3) depuis la portion principale (8) du joint d'étanchéité (7) au contact de l'enveloppe (3).

4. Réservoir selon la revendication 3, **caractérisé en ce que** la troisième portion (7c) du joint d'étanchéité (7) s'étend transversalement vers l'enveloppe (3) depuis la portion principale (8) du joint d'étanchéité (7) sensiblement dans le prolongement transversal de la première portion (7a) et/ou de la deuxième portion (7b).

5. Réservoir selon la revendication 3, **caractérisé en ce que** la troisième portion (7c) du joint d'étanchéité (7) s'étend transversalement vers l'enveloppe (3) depuis la portion principale (8) du joint d'étanchéité (7) sensiblement à mi-distance des première (7a) et deuxième (7b) portions.

6. Réservoir selon la revendication 3 ou 4, **caractérisé en ce que** chaque joint d'étanchéité (7) comporte une troisième portion (7c) formant une lèvre et une quatrième portion (7d) formant une lèvre s'étendant chacune transversalement vers l'enveloppe (3) depuis la portion principale (8) du joint d'étanchéité (7) au contact de l'enveloppe (3), la troisième portion (7c) s'étendant sensiblement dans le prolongement transversal de la première portion (7a) et la quatrième portion (7d) s'étendant sensiblement dans le prolongement transversal de la deuxième portion (7b).

7. Réservoir selon l'une quelconque des revendications précédentes, **caractérisé en ce que** chaque élément de séparation (5) se présente sous la forme d'un disque, et **en ce que** chaque joint d'étanchéité (7) se présente sous la forme d'un anneau disposé autour du disque associé.

8. Réservoir selon l'une quelconque des revendications 3 à 7, **caractérisé en ce que** la plus grande dimension transversale (Tj) de chaque joint d'étanchéité (7) est supérieure à la plus grande dimension transversale (Tv) du volume interne (V) de l'enveloppe (3).

9. Réservoir selon l'une quelconque des revendications précédentes, **caractérisé en ce que** la distance (EL) entre deux éléments de séparation (5) successifs le long de l'axe longitudinal (X) est inférieure à la plus grande dimension transversale (Tv) du volume interne (V) de l'enveloppe (3).

10. Réservoir selon l'une quelconque des revendications précédentes, **caractérisé en ce que** le conduit (4) d'alimentation et de collecte en hydrogène comporte au moins un orifice (10) de passage d'hydrogène à chaque étage du réservoir (1) formé entre deux éléments de séparation (5) successifs.

11. Réservoir selon la revendication 10, **caractérisé en ce que** le conduit (4) d'alimentation et de collecte en hydrogène comporte une pluralité de filtres (11) disposés contre le conduit (4), chaque filtre (11) étant en vis-à-vis d'au moins un orifice (10) de passage d'hydrogène, le conduit (4) comportant notamment au moins un filtre (11) disposé contre au moins un orifice (10) de passage d'hydrogène formé sur le conduit (4) à chaque étage du réservoir (1) formé entre deux éléments de séparation (5) successifs.

12. Réservoir selon la revendication 11, **caractérisé en ce que** chaque filtre (11) est maintenu contre le conduit (4) par le biais de moyens de serrage (12), notamment des colliers de serrage (12).

13. Réservoir selon l'une quelconque des revendications précédentes, **caractérisé en ce que** le matériau de stockage (2) d'hydrogène comporte des hydrures, notamment des hydrures métalliques.

14. Procédé de fabrication d'un réservoir de stockage (1) d'hydrogène selon l'une quelconque des revendications précédentes, **caractérisé en ce qu'**il comporte les étapes suivantes :
- éventuelle mise en place de matériau de stockage (2) d'hydrogène dans le fond de l'enveloppe (3) du réservoir (1),
- mise en place de matériau de stockage (2) d'hydrogène sur chaque élément de séparation (5),
l'ensemble formé par le conduit (4) d'alimentation et de collecte en hydrogène, les éléments de séparation (5) et les joints d'étanchéité (7) étant monté préalablement à la mise en place de matériau de stockage (2) d'hydrogène,
chaque élément de séparation (5) étant notamment introduit dans l'enveloppe (3) dès la fin de la mise en place de matériau de stockage (2) d'hydrogène sur cet élément de séparation (5).

## Patentansprüche

1. Tank (1) zum Speichern von Wasserstoff durch Absorption von Wasserstoff in einem Wasserstoffspeichermaterial (2), wobei der Tank (1) das Wasserstoffspeichermaterial (2) aufweist und ferner aufweist:
- einen Mantel (3) in einer Längsachse (X), der an seinen zwei Längsenden verschlossen ist,
- eine Wasserstoffversorgungs- und -sammelleitung (4), die sich entlang der Längsachse (X) erstreckt, die eine Vielzahl von Wasserstoffdurchgangsöffnungen (10) aufweist,
- einen Stapel aus einer Vielzahl von Trennelementen (5) entlang der Längsachse (X), wobei jedes Trennelement (5) einen Durchgang (6) aufweist, der die Anbringung des Trennelements (5) um die Leitung (4) erlaubt, und jedes Trennelement (5) einen Boden bildet, der etwa senkrecht zur Längsachse (X) ist, indem er das Wasserstoffspeichermaterial (2) derart aufnimmt, dass eine Vielzahl von Betten des Wasserstoffspeichermaterials (2) gebildet wird,
**dadurch gekennzeichnet, dass** die größte transversale Abmessung (Td) der Trennelemente (5) kleiner als die größte transversale Abmessung (Tv) des Innenvolumens (V) des Mantels (3) ist, in dem sich die Leitung (4), die Trennelemente (5) und die Wasserstoffspeichermaterialien (2) befinden,
dass der Tank (1) eine Vielzahl von Dichtungen (7) aufweist, wobei jede Dichtung (7) einem Trennelement (5) zugeordnet ist, wobei sich jede Dichtung (7) auf dem gesamten Umfang des entsprechenden Trennelements (5) und im Kontakt mit dem Mantel (3) in dem Raum (E) erstreckt, der zwischen dem Trennelement (5) und dem Mantel (3) aufgrund der Differenz mit der größeren transversalen Abmessung (Td, Tv) gebildet ist,
und dass jede Dichtung (7) einen Hauptabschnitt (8) aufweist, der sich längs im Kontakt mit dem Längsrand (9) des Trennelements (5) erstreckt,
und dass jede Dichtung (7) ferner einen ersten Abschnitt (7a) und einen zweiten Abschnitt (7b) aufweist, die sich transversal zur Leitung (4) hin beiderseits des entsprechenden Trennelements (5) ab dem Hauptabschnitt (8) der Dichtung (7) erstrecken.

2. Tank nach Anspruch 1, **dadurch gekennzeichnet, dass** jede Dichtung (7) mit dem entsprechenden Trennelement (5) fest verbunden ist.

3. Tank nach Anspruch 1 oder 2, **dadurch gekennzeichnet, dass** jede Dichtung (7) einen dritten Abschnitt (7c) aufweist, der eine Lippe bildet, die sich transversal zum Mantel (3) hin ab dem Hauptabschnitt (8) der Dichtung (7) im Kontakt mit dem Mantel (3) erstreckt.

4. Tank nach Anspruch 3, **dadurch gekennzeichnet, dass** sich der dritte Abschnitt (7c) der Dichtung (7) transversal zum Mantel (3) hin ab dem Hauptabschnitt (8) der Dichtung (7) etwa in der transversalen Verlängerung des ersten Abschnitts (7a) und/oder des zweiten Abschnitts (7b) erstreckt.

5. Tank nach Anspruch 3, **dadurch gekennzeichnet, dass** sich der dritte Abschnitt (7c) der Dichtung (7) transversal zum Mantel (3) hin ab dem Hauptabschnitt (8) der Dichtung (7) etwa in halbem Abstand vom ersten (7a) und zweiten (7b) Abschnitt erstreckt.

6. Tank nach Anspruch 3 oder 4, **dadurch gekennzeichnet, dass** jede Dichtung (7) einen dritten Abschnitt (7c) aufweist, der einen Lippe bildet, und einen vierten Abschnitt (7d), der eine Lippe bildet, die sich jeweils transversal zum Mantel (3) hin ab dem Hauptabschnitt (8) der Dichtung (7) im Kontakt mit dem Mantel (3) erstrecken, wobei sich der dritte Abschnitt (7c) etwa in der transversalen Verlängerung des ersten Abschnitts (7a) erstreckt und sich der vierte Abschnitt (7d) etwa in der transversalen Verlängerung des zweiten Abschnitts (7b) erstreckt.

7. Tank nach einem der vorangehenden Ansprüche, **dadurch gekennzeichnet, dass** jedes Trennelement (5) in Form einer Scheibe vorliegt, und dass jede Dichtung (7) in Form eines Rings vorliegt, der um die zugehörige Scheibe angeordnet ist.

8. Tank nach einem der Ansprüche 3 bis 7, **dadurch gekennzeichnet, dass** die größte transversale Abmessung (Tj) jeder Dichtung (7) größer als die größte transversale Abmessung (Tv) des Innenvolumens (V) des Mantels (3) ist.

9. Tank nach einem der vorangehenden Ansprüche, **dadurch gekennzeichnet, dass** der Abstand (EL) zwischen zwei aufeinanderfolgenden Trennelementen (5) entlang der Längsachse (X) kleiner als die größte transversale Abmessung (Tv) des Innenvolumens (V) des Mantels (3) ist.

10. Tank nach einem der vorangehenden Ansprüche, **dadurch gekennzeichnet, dass** die Wasserstoffversorgungs- und -sammelleitung (4) mindestens eine Wasserstoffdurchgangsöffnung (10) auf jeder Stufe des Tanks (1) aufweist, die zwischen zwei aufeinanderfolgenden Trennelementen (5) gebildet ist.

11. Tank nach Anspruch 10, **dadurch gekennzeichnet, dass** die Wasserstoffversorgungs- und -sammelleitung (4) eine Vielzahl von Filtern (11) aufweist, die an der Leitung (4) angeordnet sind, wobei jeder Filter (11) gegenüber mindestens einer Wasserstoffdurchgangsöffnung (10) ist, wobei die Leitung (4) insbesondere mindestens einen Filter (11) aufweist, der an mindestens einer Wasserstoffdurchgangsöffnung (10) angeordnet ist, die auf der Leitung (4) auf jeder Stufe des Tanks (1) gebildet ist, die zwischen zwei aufeinanderfolgenden Trennelementen (5) gebildet ist.

12. Tank nach Anspruch 11, **dadurch gekennzeichnet, dass** jeder Filter (11) anhand von Spannmitteln (12), insbesondere Spannringen (12), an der Leitung (4) gehalten wird.

13. Tank nach einem der vorangehenden Ansprüche, **dadurch gekennzeichnet, dass** das Wasserstoffspeichermaterial (2) Hydride, insbesondere Metallhydride, aufweist.

14. Verfahren zur Herstellung eines Wasserstoffspeichertanks (1) nach einem der vorangehenden Ansprüche, **dadurch gekennzeichnet, dass** es die folgenden Schritte aufweist:
- eventuell Platzieren von Wasserstoffspeichermaterial (2) im Boden des Mantels (3) des Tanks (1),
- Platzieren von Wasserstoffspeichermaterial (2) auf jedem Trennelement (5),
wobei die von der Wasserstoffversorgungs- und -sammelleitung (4), den Trennelementen (5) und den Dichtungen (7) gebildete Anordnung vor dem Platzieren von Wasserstoffspeichermaterial (2) angebracht wurden,
wobei jedes Trennelement (5) insbesondere in den Mantel (3) ab dem Ende des Platzierens von Wasserstoffspeichermaterial (2) auf diesem Trennelement (5) eingesetzt wird.

## Claims

1. Container (1) for the storage of hydrogen by absorption of the hydrogen in a hydrogen-storage material (2), said container (1) comprising the hydrogen-storage material (2), and also comprising:
- a shell (3) with a longitudinal axis (X) closed at both longitudinal ends,
- a hydrogen supply and collection pipe (4) extending along the longitudinal axis (X), comprising a plurality of hydrogen-passage orifices (10),
- a stack of a plurality of separation elements (5) along the longitudinal axis (X), each separation element (5) comprising a passage (6) for mounting the separation element (5) around the pipe (4), and each separation element (5) forming a base substantially perpendicular to the longitudinal axis (X) receiving the hydrogen-storage material (2) so as to form a plurality of beds of hydrogen-storage material (2), **characterised in that** the largest transverse dimension (Td) of the separation elements (5) is less than the largest transverse dimension (Tv) of the internal volume (V) of the shell (3) in which the pipe (4), the separation elements (5) and the hydrogen-storage materials (2) are situated,
and **in that** the container (1) comprises a plurality of seals (7), each seal (7) being associated with a separation element (5), each seal (7) extending over the entire periphery of the corresponding separation element (5) and in contact with the shell (3), in the space (E) formed between the separation element (5) and the shell (3) because of the difference in the largest transverse dimension (Td, Tv),
**in that** each seal (7) comprises a main portion (8) extending longitudinally in contact with the longitudinal edge (9) of the separation element (5),
and **in that** each seal (7) further comprises a first portion (7a) and a second portion (7b) extending transversely towards the pipe (4) on either side of the corresponding separation element (5) from the main portion (8) of the seal (7).

2. Container according to claim 1, **characterised in that** each seal (7) is secured to the corresponding separation element (5).

3. Container according to claim 1 or claim 2, **characterised in that** each seal (7) comprises a third portion (7c) forming a lip extending transversely towards the shell (3) from the main portion (8) of the seal (7) in contact with the shell (3).

4. Container according to claim 3, **characterised in that** the third portion (7c) of the seal (7) extends transversely towards the shell (3) from the main portion (8) of the seal (7) substantially transversely in line with the first portion (7a) and/or the second portion (7b).

5. Container according to claim 3, **characterised in that** the third portion (7c) of the seal (7) extends transversely towards the shell (3) from the main portion (8) of the seal (7) substantially halfway between the first (7a) and second (7b) portions.

6. Container according to claim 3 or claim 4, **characterised in that** each seal (7) comprises a third portion (7c) forming a lip and a fourth portion (7d) forming a lip each extending transversely towards the shell (3) from the main portion (8) of the seal (7) in contact with the shell (3), the third portion (7c) extending substantially transversely in line with the first portion (7a) and the fourth portion (7d) extending substantially transversely in line with the second portion (7b).

7. Container according to any of the preceding claims, **characterised in that** each separation element (5) is in the form of a disc, and **in that** each seal (7) is in the form of a ring disposed around the associated disc.

8. Container according to any of claims 3 to 7, **characterised in that** the largest transverse dimension (Tj) of each seal (7) is larger than the largest transverse dimension (Tv) of the internal volume (V) of the shell (3).

9. Container according to any of the preceding claims, **characterised in that** the distance (EL) between two successive separation elements (5) along the longitudinal axis (X) is less than the largest transverse dimension (Tv) of the internal volume (V) of the shell (3).

10. Container according to any of the preceding claims, **characterised in that** the hydrogen supply and collection pipe (4) comprises at least one hydrogen-passage orifice (10) at each stage of the container (1) formed between two successive separation elements (5).

11. Container according to claim 10, **characterised in that** the hydrogen supply and collection pipe (4) comprises a plurality of filters (11) disposed against the pipe (4), each filter (11) being facing at least hydrogen-passage orifice (10), the pipe (4) comprising in particular at least one filter (11) disposed against at least one hydrogen-passage orifice (10) formed on the pipe (4) at each stage of the container (1) formed between two successive separation elements (5).

12. Container according to claim 11, **characterised in that** each filter (11) is held against the pipe (4) by clamping means (12), in particular clamping collars (12).

13. Container according to any of the preceding claims, **characterised in that** the hydrogen-storage material (2) comprises hydrides, in particular metallic hydrides.

14. Method for manufacturing a hydrogen storage container (1) according to any of the preceding claims, **characterised in that** it comprises the following steps:
- optional placing of hydrogen-storage material (2) in the bottom of the shell (3) of the container (1),
- placing of hydrogen-storage material (2) on each separation element (5),
the assembly formed by the hydrogen supply and collection pipe (4), the separation elements (5) and the seals (7) being mounted prior to the placing of the hydrogen-storage material (2),
each separation element (5) being in particular introduced into the shell (3) at the end of the placing of hydrogen-storage material (2) on this separation element (5).
